# EUROPÄISCHE PATENTSCHRIFT

(11) **EP 1 383 313 B1**
(45) Veröffentlichungstag und Bekanntmachung des Hinweises auf die Patenterteilung: **10.08.2005**
(21) Anmeldenummer: 03008678.9
(22) Anmeldetag: 16.04.2003
(51) Int. Cl.: H04N 5/225, H04N 3/15, G02B 27/14, G02B 13/06

(54) **Vorrichtung zum Erfassen eines gro en Gesichtsfeldes**
Device for detecting a large field of view
Dispositif pour détecter un champs de vision large

(30) Priorität: 16.07.2002 DE 10232258
(43) Veröffentlichungstag der Anmeldung: 21.01.2004
(73) Patentinhaber: Diehl BGT Defence GmbH & Co.KG, 88662 Überlingen (DE)
(72) Erfinder: Tholl, Hans Dieter, 88690 Uhldingen (DE); Baumann, Rainer, 88662 Überlingen (DE); Krogmann, Dirk, 88662 Überlingen (DE)
(74) Vertreter: Diehl Patentabteilung

(56) Entgegenhaltungen:
- DE-A- 19 742 462
- DE-A- 19 904 914
- GB-A- 2 368 221
- US-A- 5 975 710

## Beschreibung

Die Erfindung betrifft eine Vorrichtung zum Erfassen eines großen Gesichtsfeldes mittels eines einzigen bildauflösenden Detektors von quadratischer Grundform mit einer zweidimensionalen Anordnung von Detektorelementen, mit einem ersten abbildenden optischen System mit einer Eintrittspupille und unterteilten strahlablenkenden Mitteln objektseitig von der Eintrittspupille, durch welche die Eintrittspupille in Teilpupillen unterteilt ist und Strahlen aus unterschiedlichen Teilgesichtsfeldern auf die verschiedenen Teilpupillen gelenkt werden, wodurch das erste abbildende optische System in einer Zwischenbildebene überlagerte Bilder der verschiedenen Teilgesichtsfelder erzeugt, mit einem zweiten abbildenden optischen System, durch welche die Zwischenbildebene auf den bildauflösenden Detektor abgebildet wird, und mit einer in der Zwischenbildebene angeordneten mikrooptischen Umschalteinrichtung, durch welche wahlweise jeweils nur die bilderzeugenden Strahlen eines der in der Zwischenbildebene überlagerten Bilder der Gesichtsfelder auf das zweite abbildende optische System geleitet werden, wobei das erste und das zweite abbildende optische System eine gemeinsame Symmetrieachse definieren und weiterhin der Detektor und die Symmetrieachse einen Würfel definieren, welcher auf zwei gegenüberliegenden Seitenflächen zentral von der Symmetrieachse durchstoßen wird und dessen übrige, laterale Seitenflächen parallel zu je einer Kante des quadratischen Detektors verlaufen.

Die DE 197 42 462 A1 (US 60 05 721 A) beschreibt eine Einrichtung zur Erfassung mehrerer Gesichtsfelder mittels eines bildauflösenden Detektors. Diese Einrichtung enthält ein erstes Objektiv, welches Gesichtsfelder in einer Zwischenbildebene abbildet. Diese Zwischenbildebene wird durch ein zweites Objektiv auf einem Detektor mit einem Raster von Detektorelementen abgebildet. Vor dem ersten Objektiv sind bildablenkende Mittel in Form einer für die Nutzstrahlung durchlässigen, flache, vierseitigen Pyramide angeordnet. Durch diese bildablenkenden Mittel werden die durch die Eintrittspupille des ersten Objektivs einfallenden Abbildungsstrahlengänge nach außen umgelenkt. Die Eintrittspupille des Objektivs wird dadurch in vier Bereiche unterteilt. Durch jeden dieser Bereiche wird ein Teilgesichtsfeld in der Zwischenbildeebene abgebildet. Dabei ergänzen sich die Teilgesichtsfelder durch die Strahlablenkung zu einem größeren Gesichtsfeld. Die Teilgesichtsfelder werden in der Zwischenbildebene überlagert. Die aus den vier Teilgesichtsfeldern kommenden Abbildungsstrahlengänge werden nun durch eine mikrooptische Linsenanordnung getrennt, derart, daß nacheinander jeweils nur ein Abbildungsstrahlengang von dem zweiten Objektiv erfaßt wird und das entsprechende Teilgesichtsfeld in der Bildebene und auf dem Detektor abgebildet wird. Die durch die verschiedenen Teilgesichtsfelder nacheinander am Detektor erzeugten Detektorsignale können dann durch Signalverarbeitung zu einem "elektronischen Bild" des gesamten Gesichtsfeldes zusammengesetzt werden. Auf diese Weise kann von einem relativ großen Gesichtsfeld ein Bild mit hoher Auflösung erzeugt werden. Das mit der bekannten Anordnung erfaßbare Gesichtsfeld ist jedoch begrenzt. Die bekannte Anordnung ist nicht als sog. "Rundumsuchgerät" verwendbar, das einen Raumwinkel von 2π oder mehr erfaßt.

Rundumsuchgeräte tasten einen Halb- oder Vollraum oder ein Panorama laufend ab. Solche Rundumsuchgeräte dienen als Überwachungsvorrichtung z.B. zum Erfassen anfliegender feindlicher Flugkörper.

Bekannte Rundumsuchgeräte arbeiten mit einer periodischen Abtastung des Raumwinkels mittels beweglicher optischer Glieder, durch welche ein Abbildungsstrahlengang ablenkbar ist. Beispiele solcher bekannten Rundumsuchgeräte zeigen die US 59 77 536 A und die EP 0 840 157 A2. Solche Rundumsuchgeräte sind aufwendig, sperrig, träge und durch bewegliche Teile störanfällig.

Der Erfindung liegt die Aufgabe zugrunde, ein Rundumsuchgerät zu schaffen, das einen für Rundumsuchgeräte typischen Raumwinkel, z.B. einen Halbraum oder Hyperhalbraum oder ein Panorama, mit hoher Auflösung und hoher Repetitionsrate, praktisch kontinuierlich abzutasten gestattet.

Die Erfindung geht aus von einer Vorrichtung der eingangs genannten Art und sieht vor, daß die Vorrichtung zum Erfassen eines Raumwinkels von mehr als 2π ausgebildet ist, indem die strahlablenkenden Mittel wenigstens drei reflektierende Flächen aufweisen durch welche Abbildungsstrahlengänge zur Abbildung von Teilgesichtsfeldern die senkrecht zu jeweils einer Seitenflächen dieses Würfels verlaufen, in Richtung der Symmetrieachse umlenkbar sind und die reflektierenden Flächen über einer gedachten zu der Symmetrieachse senkrechten, quadratischen Fläche angeordnet sind, die in vier Unterquadrate unterteilt ist, wobei jede der reflektierenden Flächen über einem zugeordneten Unterquadrat vorgesehen ist.

Die Erfindung sieht somit für die vorerwähnte bekannte Anordnung eine neue Anwendung, nämlich als Rundumsucher vor, für welche diese in der bekannten Form nicht geeignet ist. Das geschieht durch besondere Maßnahmen. Die Erfindung definiert zunächst den zu überwachenden Raum durch einen zu der Symmetrieachse und zu dem quadratischen Detektor ausgerichteten Würfel. Die Seiten dieses Würfels definieren Teilgesichtsfelder mit quadratischer Begrenzung. Diese Teilgesichtsfelder grenzen aneinander an. Die Definition quadratischer Teilgesichtsfelder ist günstig, weil auch der Detektor quadratisch ist dementsprechend ein quadratisches Gesichtsfeld erfaßt. Die strahlenablenkenden Mittel enthalten nun reflektierende Flächen, welche so angeordnet sind, daß sie Abbildungsstrahlengänge von Teilgesichtsfeldern, welche nach den Seitenflächen des Würfels ausgerichtet sind, in Richtung oder senkrecht zu der Richtung der Symmetrieachse umlenken.

Bei einer bevorzugten Ausführung der Erfindung hat das erste abbildende optische System einen Öffnungswinkel von 45°. Das stellt sicher, daß einerseits jeweils eine Würfelseitenfläche voll erfaßt wird aber andererseits keine unnötigen Überlappungen der beobachteten Teilgesichtsfelder stattfinden. Die Eintrittspupille des ersten abbildenden optischen Systems ist quadratisch, angepaßt an die quadratischen Gesichtsfelder. Dabei ist die Eintrittspupille des ersten abbildenden optischen Systems von den strahlablenkenden Mitteln gebildet. Die Eintrittspupille liegt in der objektseitigen Brennebene des ersten abbildenden optischen Systems, so daß die Abbildungsstrahlengänge für die verschiedenen Gesichtsfelder im telezentrischen Strahlengang parallel auf die Zwischenbildebene fallen. Die reflektierenden Flächen sind von den unter 45° zur Symmetrieachse geneigten Hypothenusenflächen rechtwinkliger Umlenkprismen mit jeweils einer Eintrittsfläche und einer dazu senkrechten Austrittsfläche um die Symmetrieachse winkelversetzt angeordnet. Durch die Verwendung der Umlenkprismen werden die unter einem großen Winkel bis zu 45° einfallenden Strahlen zum Lot hin gebrochen. Dadurch fallen sie Strahlen unter kleineren Winkeln auf die reflektierende Hypothenusenfläche des Umlenkprismas. Auf diese Weise wird Vignettierung vermieden. Die Umlenkprismen sind in einem zu der Symmetrieachse und dem Würfel ausgerichteten, mit quadratischen Fenstern in Richtung der zu beobachtenden Gesichtsfelder versehenen Gehäuse angeordnet sind. Die zu dem ersten abbildenden System hin offene Grundfläche dieses Gehäuses bildet die quadratische Eintrittspupille, die in vier ebenfalls quadratische Teilpupillen aufgeteilt ist. Die Austrittsflächen der Umlenkprismen überdecken dabei jeweils eine der Teilpupillen.

Die vier Teilgesichtsfelder können in verschiedener Weise orientiert sein. Eine Möglichkeit besteht darin, daß die Abbildungsstrahlengänge nach den vier zur Symmetrieachse parallelen, lateralen Seitenflächen des Würfels ausgerichtet sind. Eine andere Möglichkeit besteht darin, daß drei Abbildungsstrahlengänge nach drei zur Symmetrieachse parallelen Seitenflächen ausgerichtet sind und ein vierter Abbildungsstrahlengang parallel zur Richtung der Symmetrieachse verläuft. Im ersteren Falle wird ein Panorama abgetastet. Im letzteren Falle ist das abgetastete Gesichtsfeld ein "Hyperhalbraum", d.h. ein Gesichtsfeld, das mehr als einen Halbraum umfaßt.

Durch Verwendung von zwei solchen Vorrichtungen kann bei geeigneter Orientierung ein Vollraum erfaßt werden, wobei einige Teilgesichtsfelder redundant beobachtet werden. Durch Verwendung von drei solchen Vorrichtung kann der gesamte Vollraum redundant überwacht werden.

Ausführungsbeispiele der Erfindung sind nachstehend unter Bezugnahme auf die zugehörigen Zeichnungen näher erläutert.
- Fig. 1: ist eine schematische Darstellung eines Rundumsuchers mit mehreren, mikrooptisch umschaltbaren Gesichtsfeldern.
- Fig.2: veranschaulicht die Ausrichtung der zu beobachteten Gesichtsfelder nach einem Würfel.
- Fig.3: veranschaulicht einen Rundumsucher, der mit vier umschaltbaren, nach den lateralen Seitenflächen des Würfels ausgerichteten Teilgesichtsfeldern ein Panorama überwacht.
- Fig.4: veranschaulicht einen Rundumsucher, von dessen vier umschaltbaren Teilgesichtsfeldern drei nach lateralen Seitenflächen und eine nach der von der Symmetrieachse durchstoßenen Seitenfläche ausgerichtet ist.
- Fig.5: zeigt einen Schnitt durch eine konstruktive Ausführung der strahlablenkenden Mittel mit zwei sichtbaren Umlenkprismen.
- Fig.6: ist eine Seitenansicht der strahlablenkenden Mittel, bei einer Ausführung, bei welcher von den vier umschaltbaren Teilgesichtsfeldern drei nach lateralen Seitenflächen und eine nach der von der Symmetrieachse durchstoßenen Seitenfläche ausgerichtet ist.
- Fig.7: zeigt einen Schnitt durch die strahlablenkenden Mittel von Fig.6 senkrecht zu der Symmetrieebene.
- Fig.8: zeigt schematisch die Anwendung von drei Rundumsuchern der in Fig.7 dargestellten Art zur redundanten Überwachung des Vollraumes bei einem Flugkörperwarngerät an einem Kampfflugzeug.
- Fig.9: zeigt die Montage eines Rundumsuchers der beschriebenen Art am Flügelende eines Kampfflugzeugs.

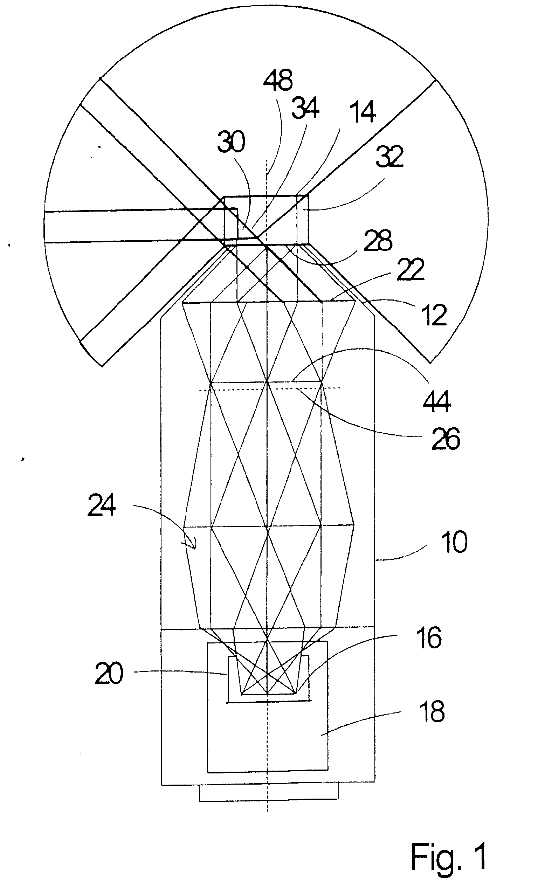

In Fig. 1 ist mit 10 ein langgestrecktes Gehäuse von quadratischem Querschnitt bezeichnet. Das Gehäuse 10 ist an seinem in Fig. 1 oberen Ende durch eine pyramidenstumpfförmige Stirnwand 12 und ein darauf angebrachtes Gehäuse 14 von noch zu beschreibenden Strahlablenkenden Mitteln abgeschlossen. Die Stirnwand 12 bildet die Seitenflächen des Stumpfes einer (gedachten) vierseitigen Pyramide mit quadratischer Grundfläche. Die Neigung der Seitenflächen beträgt 45° zur Grundfläche. Das Gehäuse 14 ist quaderförmig und hat eine quadratische Grundfläche, die sich nach den seitenwänden der Pyramide ausrichtet. Das Gehäuse 14 hat vier Seitenflächen, deren Höhe halb so groß ist wie die Kantenlänge der Grundfläche,

In dem in Fig.1 unteren Teil des Gehäuses 10 sitzt ein Detektor 16. Der Detektor 16 hat quadratische Form und ist ein bildauflösender Detektor mit einem Raster von Detektorelementen. Der Detektor 16 ist in üblicher Weise mit einer Kühlvorrichtung18 versehen und weist eine von der Kilhlvorrichtung mit gekühlte Kaltblende 20 auf.

In dem Gehäuse 10 sitzt ein erstes abbildendes optisches System in Form eines Primärobjektivs 22 und ein zweites abbildendes optisches System in Form eines Detektorobjektivs 24, Das Primärobjektiv 22 erzeugt in noch zu beschreibender Weise überlagerte Bilder von Teilgesichtsfeldern in einer Zwischenbildebene 26. Das Detektorobjektiv 24 bildet die Zwischenbildebene 26 in einer in der Ebene des Detektors 16 liegenden Bildebene ab.

Die Grundfläche des Gehäuses 14 bildet die quadratische Eintrittspupille 28 für das Primärobjektiv 22. Diese Eintrittspupille 28 liegt in der objektseitigen Brennebene des Primärobjektivs 22. Die Abbildung der Teilgesichtsfelder in der Zwischenbildebene erfolgt daher im telezentrischen Strahlengang. Die Eintrittspupille 28 ist in vier quadratische Teilpupillen unterteilt, die den verschiedenen Teilgesichtsfeldern zugeordnet sind.

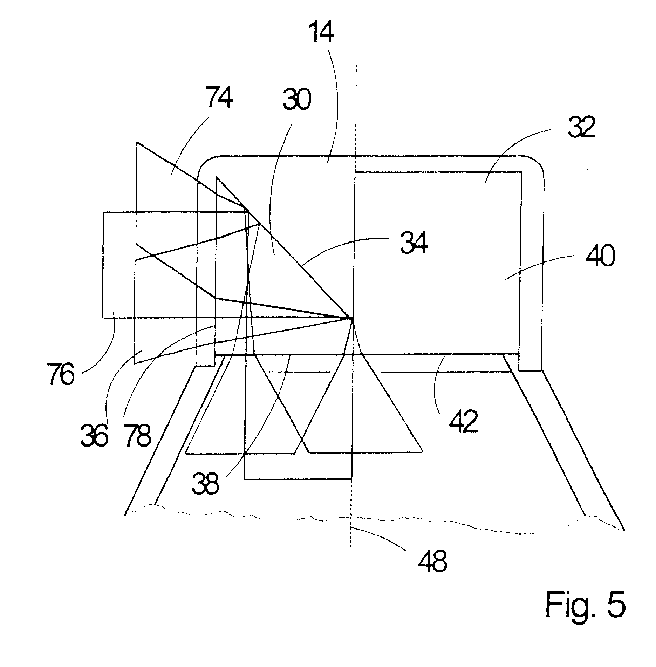

In dem Gehäuse sitzen Umlenkprismen, von denen in Fig.1 ein Umlenkprisma 30 zu sehen ist. Das Umlenkprisma 30 hat gleichschenklig-rechtwinkligen Querschnitt. Eine "Hypothenusenfläche" 34 (Fig.5) bildet eine reflektierende Fläche. Eine der rechtwinklig zueinander verlaufenden "Kathetenflächen" 36 bildet die Eintrittsfläche des Umlenkprismas 30. Die andere "Kathetenfläche" 38 bildet die Austrittsfläche. In Fig.5 ist ein zweites Umlenkprisma 32 zu sehen, neben dem Umlenkprisma 30 sitzt und dessen Eintrittsfläche 40 rechtwinklig zu der Eintrittsfläche 36 des Umlenkprismas 30 verläuft. In Fig.5 sieht man durch die Eintrittsfläche 40 unter 45° auf die reflektierende Hypothenusenfläche des Umlenkprismas 32. Die Austrittsflächen 38, 42 der Umlenkprismen 30 bzw. 32 füllen jeweils eine Teilpupille der Eintrittspupille 28.

Das Primärobjektiv 22 hat einen Öffnungswinkel von 45°.

In der Zwischenbildebene ist eine mikrooptische Strahlenablenkeinrichtung 44 angeordnet. Diese mikrooptische Strahlenablenkanordnung lenkt jeweils den Abbildungsstrahlengang aus einer der vier Teilpupillen auf das Detektorobjektiv 24, während die Abbildungsstrahlengänge aus den anderen Teilpupillen nicht von dem Detektorobjektiv erfaßt werden. Man kann sich die Wirkungsweise der mikrooptischen Strahlenablenkeinrichtung am besten veranschaulichen, wenn man die Strahlengänge rückwärts verfolgt: Ausgehend von einem Bildpunkt in der Bildebene auf dem Detektor 16 kann ein Abbildungsstrahlengang zurüekverfolgt werden bis zu einem konjugierten Bildpunkt in der Zwischenbildebene. Durch die mikrooptische Strahlenablenkanordnung kann nun der Abbildungsstrahlengang wahlweise auf eine der Teilpupillen gelenkt werden. Entsprechend wird "vorwärts" durch die mikrooptische Strahlenablenkanordnung nur der Abbildungsstrahlengang aus dieser Teilpupille auf den Bildpunkt in der Bildebene gelenkt, während die Strahlengänge, die aus den anderen Teilpupillen kommen und ebenfalls einen Bildpunkt an der gleichen Stelle in der Zwischenbildebene erzeugen, von dem Detektorobjektiv 24 nicht erfaßt werden. Das Detektorobjektiv 24 und der Detektor 16 "sehen" diese Bildpunkte in der Zwischenbildebene 26 nicht.

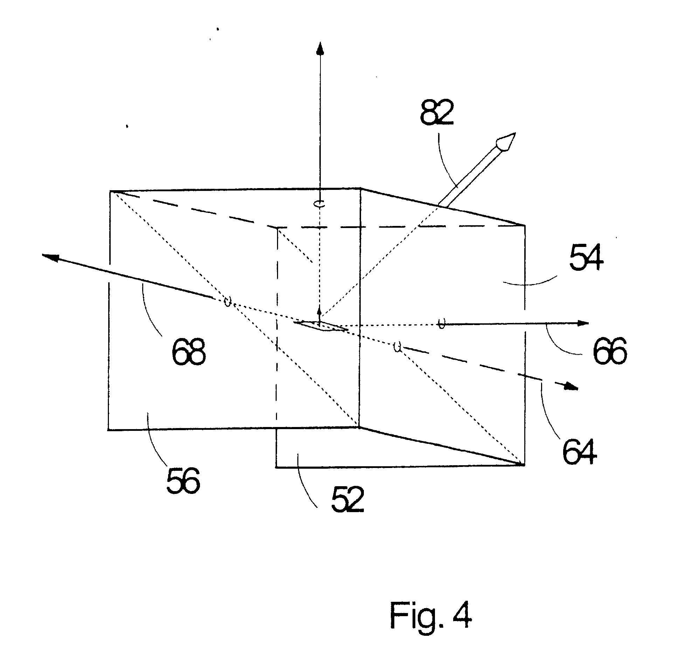

Die mikrooptische Strahlenablenkanordnung 44 kann beispielsweise, ähnlich wie in Fig.4 der DE 199 04 914 A1 dargestellt ist, mit zwei Mikrolinsenrastern aufgebaut sein, die gegeneinander in zwei zueinander senkrechten Richtungen um jeweils einen Schritt verstellbar sind.

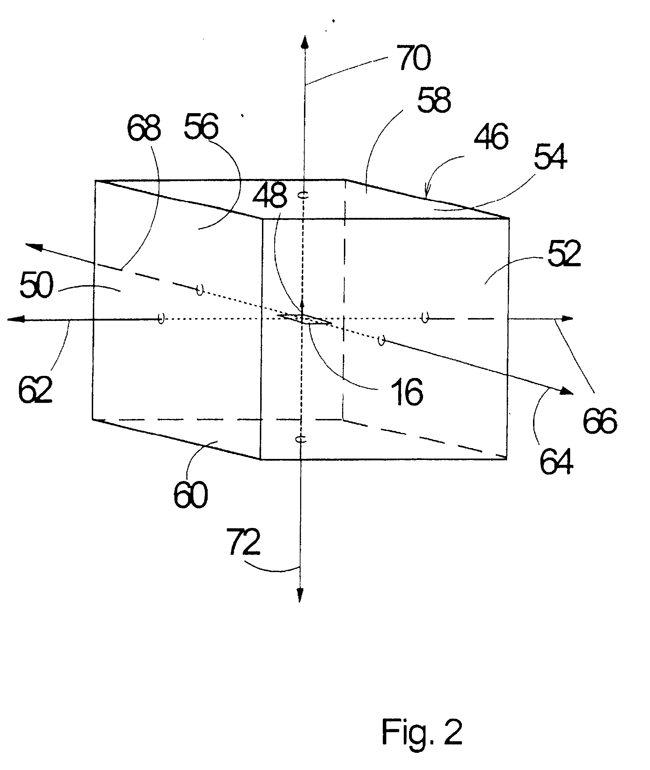

Die Wirkungsweise der beschriebenen Anordnung ist nachstehend unter Bezugnahme insbesondere auf Fig.2 erläutert.

In Fig.2 ist ein (gedachter) Würfel 46 dargestellt. Der beschriebene Rundumsucher sitzt im Mittelpunkt dieses gedachten Würfels 46. In Fig.2 sind der Detektor 16 und die Symmetrieachse 48 des Rundumsuchers angedeutet. Der Würfel 46 hat sechs Flächen, nämlich die vier "lateralen", zur Symmetrieachse 48 parallelen Flächen 50, 52, 54 und 56 sowie zwei gegenüberliegende, zur Symmetrieachse 48 senkrechten Flächen 58 und 60. Die Flächen 58 und 60 werden von der Symmetrieachse 48 in ihrem Mittelpunkt durchstochen. Die lateralen Flächen 50, 52, 54 und 56 erstrecken sich parallel zu den Kanten des quadratischen Detektors. Der Würfel 45 definiert mit seinen Flächen 50 bis 60 sechs rechteckige Teilgesichtsfelder. Diese Teilgesichtsfelder grenzen aneinander und umfassen den Vollraum.

Durch die Anordnung der Umlenkprismen können nun wahlweise vier dieser Teilgesichtsfelder von dem Rundumdetektor erfaßt werden. Das Primärobjektiv 22 hat für jedes Teilgesichtsfeld einen quadratischen Pupillenteil und einen Öffnungswinkel von 45°. Bei Umlenkung des Strahlenganges um 90° durch ein Umlenkprisma z.B. 30 wird jeweils gerade eine laterale Fläche, z.B. 50, des Würfels von dem Primärobjektiv 22 erfaßt.

Der verschiedenen Flächen 50 bis 60 des Würfels 45 sind optische Achsen 62, 64, 66, 68 und 70 zugeordnet, sowie -der vollständigkeit halber- eine optische Achse 72 nach unten in Fig.2. Jeder Abbildungsstrahlengang eines Teilgesichtsfeldes ist zu der optischen Achse, z.B. 62, zentriert und hat eine quadratische Teilpupille als Eintrittspupille und einen Öffnungswinkel von 45°, so daß er gerade das quadratische Teilgesichtsfeld erfaßt. Die Bilder der Teilgesichtsfelder sind in der Zwischenbildebene überlagert. Die Teilpupille liegt in der Brennebene des Primärobjektivs 22, so daß die Bilder der Teilgesichtsfelder im telezentrischen Strahlengang erzeugt werden.

Die Vorteile der Umlenkprismen, z.B. 30, sind am besten aus Fig.5 ersichtlich. Der Öffnungswinkel des Primärobjektivs ist 45°. Es werden also Strahlenbündel 74, 76 ,78 von +45° über 0° bis -45° erfaßt. Wenn die reflektierende Fläche ein reiner Spiegel wäre, dann würde eine starke Vignettierung auftreten. Durch das Umlenkprisma 30 werden die Strahlen an der Eintrittsfläche 36 zur Flächennormalen hin gebrochen. Man erkennt, daß damit der Öffnungswinkel der Strahlen innerhalb des Umlenkprismas 30 stark veringert wird und alle Strahlen auf die reflektierende Fläche 34 treffen. Beim Austritt aus der Austrittsfläche 38 werden die Strahlen wieder von der Flächennormalen weg gebrochen, so daß sie wieder einen Öffnungswinkel von 45° bilden. Im Strahlengang wirkt das Umlenkprisma 30 wie eine planparallele Platte. Bei Verwendung eines Materials mit hohem Brechungsindex wie Germanium wird der Öffnungswinkel des Abbildungsstrahlenganges in dem Umlenkprisma von 45° auf etwa 10° reduziert.

Die vier zur Verfügung stehenden Teilgesichtsfelder können je nach Anordnung der Umlenkprismen 30 etc. zur Überwachung unterschiedlicher Gesichtsfelder ausgenutzt werden.

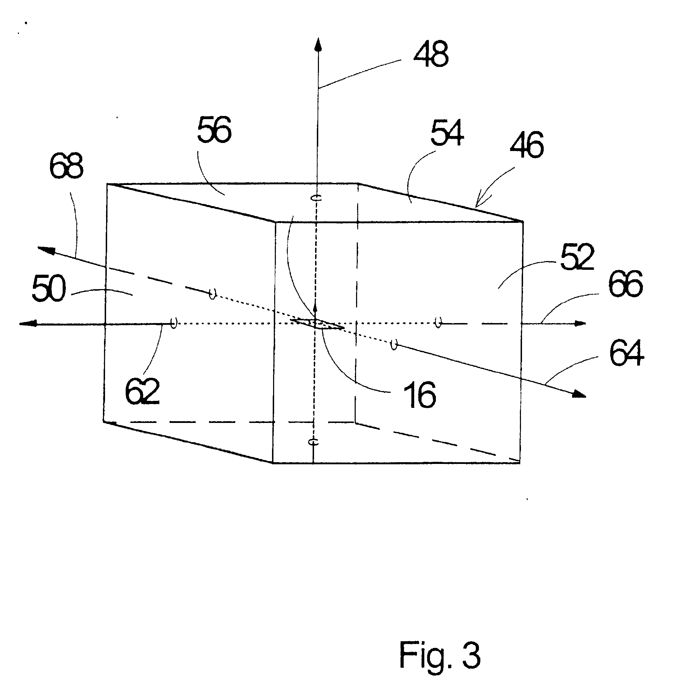

Fig.3 zeigt eine Möglichkeit, bei welcher der Rundumsucher ein Panorama über 360° mit einem Öffnungswinkel von 90° erfaßt. Zu diesem Zweck sind die optischen Achsen der umgelenkten Abbildungsstrahlengänge nach den lateralen Flächen 50, 52 54 und 56 des Würfels 46 ausgerichtet und wie in Fig.2 mit 62, 64, 66 bzw. 68 bezeichnet.

Eine solche Anordnung ist in Fig.5 dargestellt. Die vier Umlenkprismen, von denen in Fig.5 nur die Umlenkprismen 30 und 32 sichtbar sind, sind in dem Gehäuse 14 gehaltert. Das Gehäuse 14 weist Durchbrüche oder Fenster vor den Eintrittsflächen 36 der Umlenkprismen 30, 32 usw. auf. Vor der Eintrittsfläche 40 des Umlenkprismas 32 ist ein nach vorn in Fig.5 offener Durchbruch oder ein Fenster vorgesehen. Eine dazu um 180° um die Symmetrieachse 48 winkelversetzte gleichartige Anordnung weist ein Fenster auf der linken Seite nach hinten in Fig.5 und ein Fenster nach rechts in Fig.5 auf, wobei hinter jedem Fenster ein Umlenkprisma sitzt.

Fig.4 veranschaulicht die Möglichkeit, daß drei der in den vier Teilpupillen zur Verfügung stehenden Abbildungsstrahlengänge um jeweils 90° nach hinten, nach recht und nach vorn in Fig.4 umgelenkt und nach den Flächen 56, 54 und 52 des Würfels 46 ausgerichtet sind, während der dritte Abbildungsstrahlengang parallel zu der Symmetrieachse gerade nach oben verläuft und nach der Fläche 58 des Würfels 46 ausgerichtet ist. Es sind dann in den Teilpupillen drei Umlenkprismen angeordnet, während der Raum vor der dritten Teilpupille frei ist, so daß der zugehörige Abbildungsstrahlengang gerade durch das Gehäuse 14 und ein in diesem vorgesehenes Fenster hindurchgeht. Das liefert die optischen Achsen 68, 66, 64 und 70 der Abbildungsstrahlengänge für die vier auch hier wieder aneinanderschließenden Teilgesichtsfelder. Es ergibt sich ein Gesichtsfeld in Form eines "Hyperhalbraumes", d.h. ein Gesichtsfeld, das einen über den Halbraum hinausgehenden Raumwinkel erfaßt. In Fig.4 ist die Achse des Halbraumes mit 82 bezeichnet.

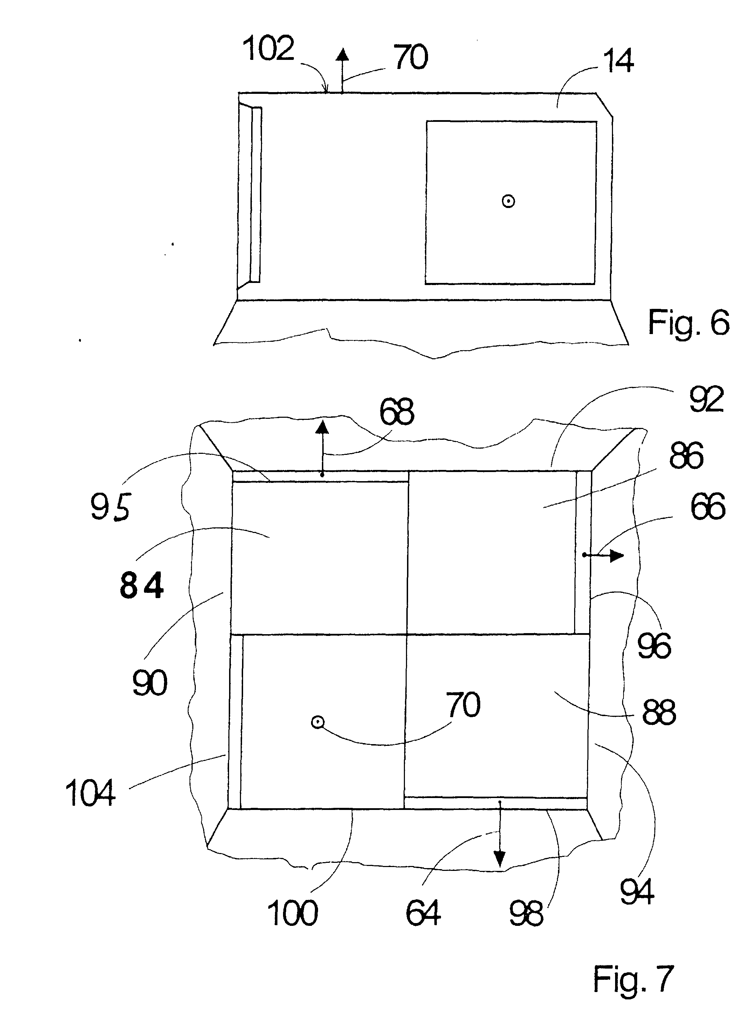

Eine solche Anordnung ist in den Figuren 6 und 7 dargestellt.

In dem Gehäuse 14 sitzen drei Umlenkprismen 84, 86 und 88 vor drei Teilpupillen und 94. Vor den Umlenkprismen 84, 86 und 88 sind in den Seitenwänden des Gehäuses Fensterdurchbrüche 95, 96 und 98. Jedes Fenster erstreckt sich im Bereich der zugehörigen Teilpupille 90, 92, 94 über die Hälfte der jeweiligen Seitenwand des Gehäuses 14. Durch die drei Umlenkprismen 84, 86 und 88 werden die durch die quadratischen Teilpupillen 90, 92 und 94 verlaufenden Abbildungsstrahlengänge um 90° umgelenkt und treten mit den optischen Achsen 68, 66 bzw. 64 durch die Fenster 95, 96 bzw. 98 aus. Genauer gesagt, treten die Strahlen von den verschiedenen Gesichtsfeldern durch die Fenster ein, werden durch die Umlenkprismen umgelenkt und fallen durch die Teilpupillen auf das Primärobjektiv 22 (Fig.1).

Vor der vierten Teilpupille 100 ist der Raum in dem Gehäuse leer. Der durch die vierte Teilpupille hindurchtretende Abbildungsstrahlengang tritt durch ein an der Oberseite des Gehäuses 14 über der Teilpupille 100 gebildetes Fenster 102 gerade nach oben aus, wie durch die optische Achse 70 dargestellt ist. Ein im Bereich der Teilpupille vorgesehenes Fenster 104 hat bei dieser Konfiguration keine Funktion. Das Fenster 104 gestattet jedoch die wahlweise Realisierung der "Panorama"- und "Hyperhalbraum"-Version mit ein und demselbem Gehäuse. Für die Panorama-Version braucht lediglich vor die Teilpupille 100 ebenfalls ein Umlenkprisma wie Umlenkprisma 30 in Fig.5 eingesetzt zu werden.

Die mikrooptische Strahlenablenkeinrichtung in der Bildebene gestattet mit sehr kleinen Stellwegen sehr schnell eine Umschaltung zwischen den verschiedenen Teilpupillen. Die Umschaltung kann mittels Piezostellern erfolgen. Die Abtastung des gesamten Gesichtsfeldes z.B. eines Panoramas oder eines Halbraumes kann dabei beispielsweise mit einer Frequenz von 1 kHz erfolgen, das Gesichtsfeld also praktisch kontinuierlich erfaßt werden. Der beschriebene Rundumsucher ist sehr kompakt und, durch Wegfall beweglicher makromechanischer Teile sehr robust und kostengünstig.

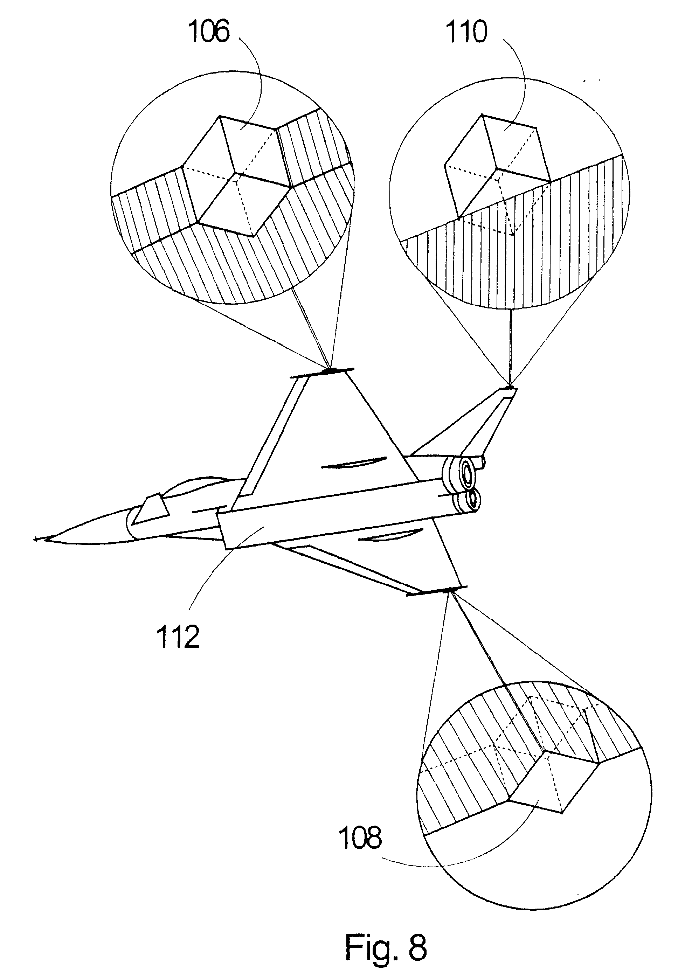

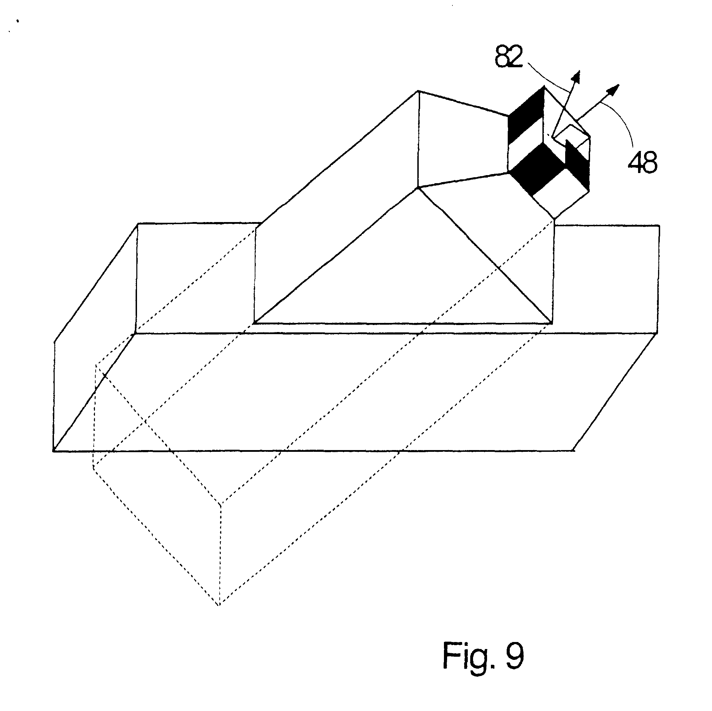

Fig.8 zeigt die Anwendung von drei Rundumsuchen 106, 108 und 110 nach Art von Fig.6 und 7 bei einem Flugkörperwarnsystem an einem Kampfflugzeug 112. Dabei sind zwei Rundumsucher 106 und 108 an den Flügetenden angebracht. Der dritte Rundumsucher 110 sitzt am Leitwerk. Fig.9 zeigt die Anbringung des Rundumsuchers am Flügelende des Kampfflugzeugs. Die Rundumsucher 106, 108 und 110 sind mit ihren Halbraumachsen 82 (Fig.4) so zueinander angeordnet, daß jedes Teilgesichtsfeld redundant durch zwei verschiedene Rundumsucher erfaßt wird. Das gestattet auch die Ortsbestimmung eines erfaßten Objekts, z.B. eines Flugkörpers, im Raum durch Triangulation.

## Patentansprüche

1. Vorrichtung zum Erfassen eines großen Gesichtsfeldes mittels eines einzigen bildauflösenden Detektors (16) von quadratischer Grundform mit einer zweidimensionalen Anordnung von Detektorelementen,
(a) mit einem ersten abbildenden optischen System (22) mit einer Eintrittspupille und unterteilten strahlablenkenden Mitteln (30, 32; 84,86,88) objektseitig von der Eintrittspupille, durch welche die Eintrittspupille in Teilpupillen (90,92,94,100) unterteilt ist und Strahlen aus unterschiedlichen Teilgesichtsfeldern auf die verschiedenen Teilpupillen (90,92,94,100) gelenkt werden, wodurch das erste abbildende optische System (22) in einer Zwischenbildebene (26) überlagerte Bilder der verschiedenen Teilgesichtsfelder erzeugt,
(b) mit einem zweiten abbildenden optischen System (24), durch welche die Zwischenbildebene (26) auf den bildauflösenden Detektor (16) abgebildet wird, und
(c) mit einer in der Zwischenbildebene (26) angeordneten mikrooptischen Umschalteinrichtung (44), durch welche wahlweise jeweils nur die bilderzeugenden Strahlen eines der in der Zwischenbildebene (26) überlagerten Bilder der Gesichtsfelder auf das zweite abbildende optische System (24) geleitet werden,
(d) wobei das erste und das zweite abbildende optische System (22,24) eine gemeinsame Symmetrieachse (48) definieren und weiterhin der Detektor (16) und die Symmetrieachse (48) einen Würfel (46) definieren, welcher auf zwei gegenüberliegenden Seitenflächen (58,60) zentral von der Symmetrieachse (48) durchstoßen wird und dessen übrige, laterale Seitenflächen (50,52,54,56) parallel zu je einer Kante des quadratischen Detektors (16) verlaufen
**dadurch gekennzeichnet, daß**
(e) die Vorrichtung zum Erfassen eines Raumwinkels von mehr als 2π ausgebildet ist, indem
(f) die strahlablenkenden Mittel (30,32;84,86,88) wenigstens drei reflektierende Flächen (34) aufweisen durch welche Abbildungsstrahlengänge zur Abbildung von Gesichtsfeldern, die senkrecht zu jeweils einer Seitenflächen dieses Würfels (46) verlaufen, in Richtung der Symmetrieachse (48) umlenkbar sind,
(g) die reflektierenden Flächen über einer gedachten zu der Symmetrieachse senkrechten, quadratischen Fläche angeordnet sind, die in vier Unterquadrate unterteilt ist, wobei jede der reflektierenden Flächen über einem zugeordneten Unterquadrat vorgesehen ist.

2. Vorrichtung nach Anspruch 1, **dadurch gekennzeichnet, daß** das erste abbildende optische System (22) einen Öffnungswinkel von 45° hat.

3. Vorrichtung nach Anspruch 2, **dadurch gekennzeichnet, daß** die Eintrittspupille des ersten abbildenden optischen Systems (22) quadratisch ist.

4. Vorrichtung nach Anspruch 3, **dadurch gekennzeichnet, daß** die Eintrittspupille des ersten abbildenden optischen Systems von den strahlablenkenden Mitteln (30,32;84,86,88) gebildet ist.

5. Vorrichtung nach Anspruch 4, **dadurch gekennzeichnet, daß** die Eintrittspupille in der objektseitigen Brennebene des ersten abbildenden optischen Systems (22) liegt, so daß die Abbildungsstrahlengänge für die verschiedenen Gesichtsfelder im telezentrischen Strahlengang parallel auf die Zwischenbildebene (26) fallen.

6. Vorrichtung nach einem der Ansprüche 1 bis 5, **dadurch gekennzeichnet, daß** die reflektierenden Flächen (34) von den unter 45° zur Symmetrieachse geneigten Hypothenusenflächen rechtwinkliger Umlenkprismen (30) mit jeweils einer Eintrittsfläche (36) und einer dazu senkrechten Austrittsfläche (38) um die Symmetrieachse (48) winkelversetzt angeordnet sind.

7. Vorrichtung nach Anspruch 6, **dadurch gekennzeichnet, daß**
(a) die Umlenkprismen (30) in einem zu der Symmetrieachse (48) und dem Würfel (46) ausgerichteten, mit quadratischen Fenstern (36; 95,96,98) in Richtung der zu beobachtenden Gesichtsfelder versehenen Gehäuse (14) angeordnet sind,
(b) die zu dem ersten abbildenden System (22) hin offene Grundfläche des Gehäuses (14) die quadratische Eintrittspupille bildet, die in vier ebenfalls quadratische Teilpupillen (90,92,94,100) aufgeteilt ist und
(c) die Austrittsflächen (38) der Umlenkprismen (30) jeweils eine der Teilpupillen überdecken.

8. Vorrichtung nach einem der Ansprüche 1 bis 7, **dadurch gekennzeichnet, daß** die optischen Achsen der Abbildungsstrahlengänge senkrecht zu den vier zur Symmetrieachse (48) parallelen, lateralen Seitenflächen (50,52,54,56) des Würfels (46) ausgerichtet sind.

9. Vorrichtung nach einem der Ansprüche 1 bis 7, **dadurch gekennzeichnet, daß** die optischen Achsen von drei Abbildungsstrahlengängen senkrecht zu drei zur Symmetrieachse (48) parallelen Seitenflächen (56,54,52) ausgerichtet sind und ein vierter Abbildungsstrahlengang parallel zur Richtung der Symmetrieachse (48) verläuft.

10. System mit drei räumlich getrennten Vorrichtungen nach den Ansprüchen 8 oder/und 9, **dadurch gekennzeichnet, daß** jedes Teilgesichtsfeld durch jeweils zwei der drei Vorrichtungen redundant und stereoskopisch erfasst wird.

## Claims

1. Apparatus for coverage of a large field of view by means of a single image-resolving detector (16) with a square basic shape and with a two-dimensional arrangement of detector elements,
(a) having a first imaging optical system (22) with an inlet pupil and subdivided beam-deflecting means (30, 32; 84, 86, 88) on the object side of the inlet pupil, by means of which the inlet pupil is subdivided into pupil elements (90, 92, 94, 100) and beams from different field of view elements are passed to the various pupil elements (90, 92, 94, 100), as a result of which the first imaging optical system (22) produces images, which are superimposed on an intermediate image plane (26), of the various field of view elements,
(b) having a second imaging optical system (24), by means of which the intermediate image plane (26) is imaged on the image-resolving detector (16), and
(c) having a microoptical switching device (44) which is arranged on the intermediate image plane (26) and by means of which, selectively, in each case only the image-producing beams of one of the images, which are superimposed on the intermediate image plane (26), of the fields of view are passed to the second imaging optical system (24),
(d) with the first and the second imaging optical system (22, 24) defining a common axis of symmetry (48), and the detector (16) and the axis of symmetry (48) furthermore defining a cube (46) through the centre of which the axis of symmetry (48) passes on two opposite side surfaces (58, 60), and whose other, lateral side surfaces (50, 52, 54, 56) run parallel to in each case one edge of the square detector (16),
**characterized in that**
(*e*) the apparatus is designed to cover a spatial angle of more than 2π, **in that**
(*f*) the beam-deflecting means (30, 32; 84, 86, 88) have at least three reflective surfaces (34), by means of which imaging beam paths can be deflected in the direction of the axis of symmetry (48) in order to image fields of view which run at right angles to in each case one of the side surfaces of this cube (46),
(g) the refl ective surfaces are arranged above an imaginary square surface which is at right angles to the axis of symmetry and is subdivided into four lower squares, with each of the reflective surfaces being provided above an associated lower square.

2. Apparatus according to Claim 1, **characterized in that** the first imaging optical system (22) has a beam angle of 45°.

3. Apparatus according to Claim 2, **characterized in that** the inlet pupil of the first imaging optical system (22) is square.

4. Apparatus according to Claim 3, **characterized in that** the inlet pupil of the first imaging optical system is formed by the beam-deflecting means (30, 32; 84, 86, 88).

5. Apparatus according to Claim 4, **characterized in that** the inlet pupil is located on the object-side focal plane of the first imaging optical system (22), such that the imaging beam paths for the various fields of view are parallel to the intermediate image plane (26) in the telecentric beam path.

6. Apparatus according to one of Claims 1 to 5, **characterized in that** the reflective surfaces (34) of the hypotenuse surfaces, which are inclined at 45° to the axis of symmetry, of right-angled deflection prisms (30) are arranged with in each case one inlet surface (36) and an outlet surface (38), which is at right angles to it, with an angular offset about the axis of symmetry (48).

7. Apparatus according to Claim 6, **characterized in that**
(a) the deflection prisms (30) are arranged in a housing (14) which is aligned with respect to the axis of symmetry (48) and with respect to the cube (46) and is provided with square windows (36; 95, 96, 98) in the direction of the fields of view to be observed,
(b) the base surface of the housing (14), which is open towards the first imaging system (22), forms the square inlet pupil which is subdivided into four pupil elements (90, 92, 94, 100), which are likewise square, and
(c) the outlet surfaces (38) of the deflection prisms (30) each cover one of the pupil elements.

8. Apparatus according to one of Claims 1 to 7, **characterized in that** the optical axes of the imaging beam paths are aligned at right angles to the four lateral side surfaces (50, 52, 54, 56), which are parallel to the axis of symmetry (48), of the cube (46).

9. Apparatus according to one of Claims 1 to 7, **characterized in that** the optical axes of three imaging beam paths are aligned at right angles to three side surfaces (56, 54, 52) which are parallel to the axis of symmetry (48), and a fourth imaging beam path runs parallel to the direction of the axis of symmetry (48).

10. System with three physically separate apparatuses according to Claims 8 and/or 9, **characterized in that** each field of view element is covered redundantly and stereoscopically by in each case two of the three apparatuses.

## Revendications

1. Dispositif pour détecter un champ de vision large au moyen d'un unique détecteur (16) à résolution d'image, de forme de base carrée avec une disposition bidimensionnelle d'éléments détecteurs,
(a) avec un premier système (22) de reproduction optique, comprenant une pupille d'entrée et des moyens subdivisés (30,32; 84,86,88) de déviation de rayons situés côté objet de la pupille d'entrée, par lesquels la pupille d'entrée est divisée en pupilles partielles (90,92,94,100) et des rayons provenant de différents champs de vision partiels sont dirigés sur les différentes pupilles partielles (90,92,94,100), de sorte que le premier système (22) de reproduction optique produit, dans un plan d'image intermédiaire (26), des images superposées des différents champs de vision partiels,
(b) avec un deuxième système (24) de reproduction optique, par lequel le plan d'image intermédiaire (26) est reproduit sur le détecteur (16) à résolution d'image, et
(c) avec un dispositif (44) de commutation micro-optique disposé dans le plan d'image intermédiaire (26), par lequel, sélectivement, seuls les rayons producteurs d'image d'une des images des champs de vision qui sont superposées dans le plan d'image intermédiaire (26) sont chaque fois dirigés sur le deuxième système (24) de reproduction optique,
(d) sachant que le premier et le deuxième systèmes (22,24) de reproduction optique définissent un axe de symétrie commun (48) et qu'en outre le détecteur (16) et l'axe de symétrie (48) définissent un cube (46), qui est traversé centralement par l'axe de symétrie (48) sur deux faces de côtés opposés (58,60) et dont les autres faces (50,52,54,56), de côtés latéraux, s'étendent chacune parallèlement à une arête respective du détecteur carré (16),
**caractérisé en ce que**
(e) le dispositif est conçu pour détecter un angle solide supérieur à 2π, par le fait que
(f) les moyens (30,32 ; 84,86,88) de déviation de rayons présentent au moins trois surfaces réfléchissantes (34) par lesquelles des trajets de rayons de reproduction peuvent être déviés dans la direction de l'axe de symétrie (48) afin de reproduire des champs de vision qui s'étendent respectivement perpendiculairement à une face de côté de ce cube (46),
(g) les surfaces réfléchissantes sont disposées sur une surface carrée imaginaire perpendiculaire à l'axe de symétrie qui est subdivisée en quatre sous-carrés, chacune des surfaces réfléchissantes étant prévue sur un sous-carré associé.

2. Dispositif selon la revendication 1, **caractérisé en ce que** le premier système (22) de reproduction optique possède un angle d'ouverture de 45°.

3. Dispositif selon la revendication 2, **caractérisé en ce que** la pupille d'entrée du premier système (22) de reproduction optique est carrée.

4. Dispositif selon la revendication 3, **caractérisé en ce que** la pupille d'entrée du premier système de reproduction optique est formée par les moyens (30,32 ; 84,86,88) de déviation de rayons.

5. Dispositif selon la revendication 4, **caractérisé en ce que** la pupille d'entrée se trouve dans le plan focal côté objet du premier système (22) de reproduction optique, de sorte que les trajets de rayons de reproduction pour les différents champs de vision atteignent parallèlement le plan d'image intermédiaire (26) dans le trajet de rayons télécentrique.

6. Dispositif selon l'une quelconque des revendications 1 à 5, **caractérisé en ce que** les surfaces réfléchissantes (34) sont disposées en étant décalées angulairement autour de l'axe de symétrie (48) par les faces d'hypoténuse, inclinées de 45° par rapport à l'axe de symétrie, de prismes droits de renvoi (30) doté chacun d'une face d'entrée (36) et d'une face de sortie (38) perpendiculaire à la face d'entrée.

7. Dispositif selon la revendication 6, **caractérisé en ce que**
(a) les prismes de renvoi (30) sont disposés dans un boîtier (14), qui est aligné avec l'axe de symétrie (48) et avec le cube (46) et qui est doté de fenêtres carrées (36 ; 95,96,98) en direction des champs de vision à observer,
(b) la face de base du boîtier (14) qui est ouverte vers le premier système de reproduction (22) forme la pupille d'entrée carrée, qui est divisée en quatre pupilles partielles (90,92,94,100) également carrées, et
(c) les faces de sortie (38) des prismes de renvoi (30) recouvrent respectivement une des pupilles partielles.

8. Dispositif selon l'une quelconque des revendications 1 à 7, **caractérisé en ce que** les axes optiques des trajets de rayons de reproduction sont orientés perpendiculairement aux quatre faces (50,52,54,56) de côtés latéraux, parallèles à l'axe de symétrie (48), du cube (46).

9. Dispositif selon l'une quelconque des revendications 1 à 7, **caractérisé en ce que** les axes optiques de trois trajets de rayons de reproduction sont orientés perpendiculairement à trois faces de côtés (56,54,52) parallèles à l'axe de symétrie (48), et un quatrième trajet de rayons de reproduction s'étend parallèlement à la direction de l'axe de symétrie (48).

10. Système avec trois dispositifs spatialement séparés selon les revendications 8 et/ou 9, **caractérisé en ce que** chaque champ de vision partiel est détecté de façon redondante et stéréoscopique par deux dispositifs respectifs parmi les trois.
